# EUROPÄISCHE PATENTANMELDUNG

(11) **EP 3 106 629 A1**
(43) Veröffentlichungstag der Anmeldung: **21.12.2016**
(21) Anmeldenummer: 16166217.6
(22) Anmeldetag: 20.04.2016
(51) Int. Cl.: F01D 25/16, F04D 29/051, F02C 6/12

(54) **VORRICHTUNG ZUM KOMPRIMIEREN EINES FLUIDS UND HERSTELLUNGSVERFAHREN FÜR EINE VORRICHTUNG ZUM KOMPRIMIEREN EINES FLUIDS**

(30) Priorität: 16.06.2015 DE 102015211042
(71) Anmelder: ROBERT BOSCH GMBH, 70442 Stuttgart (DE)
(72) Erfinder: Vogt, Andreas, 71272 Renningen (DE); Mayer, Michael, 70565 Stuttgart (DE)

(57) **Zusammenfassung**

Die Erfindung schafft eine Vorrichtung (1; 100) zum Komprimieren eines Fluids (F1) und ein entsprechendes Herstellungsverfahren. Die Vorrichtung ist ausgebildet mit:
einem Impeller (12);
einem Deckel (16), in welchem der Impeller (12) eingehaust ist;
wobei der Deckel (16) an einer von dem Impeller (12) abgewandten Außenseite (19-1) des Deckels (16) mit einem ersten Abschnitt (16-1) ausgebildet ist, welcher sich, bezogen auf eine Drehachse (A) des Impellers (12), in radialer und tangentialer Richtung erstreckt; und
einem Axiallager (32), welches dazu ausgebildet ist, durch Zusammenwirken mit dem ersten Abschnitt (16-1) des Deckels (16) als Lagerfläche den Impeller (12) in, bezogen auf die Drehachse (A) des Impellers (12), axialer Richtung zu lagern.

## Beschreibung

Die vorliegende Erfindung betrifft eine Vorrichtung zum Komprimieren und/oder Expandieren eines Fluids und Herstellungsverfahren für eine Vorrichtung zum Komprimieren eines Fluids. Eine solche Vorrichtung kann beispielsweise eine Strömungsmaschine, eine Turbomaschine, eine Turbine, eine Gasturbine oder ein Kompressor sein.

### Stand der Technik

Vorrichtungen zum Komprimieren von Fluiden weisen teilweise einen Impeller auf, welcher in einem Deckel eingehaust ist, wobei der Deckel relativ zu dem Impeller fixiert ist und sich gemeinsam mit dem Impeller um eine gemeinsame Drehachse dreht. Der Impeller wird auch Laufrad genannt und kann, zusammen mit dem Deckel, auch als gedeckeltes Laufrad bezeichnet werden.

Dabei ist ein Spalt zwischen dem Deckel und einem Gehäuse nötig, in welchem der Deckel und das Laufrad montiert sind, damit sich der Deckel mit dem Impeller möglichst ungehindert bewegen kann. Bei fortschreitendem Downsizing, d.h. fortschreitenden Versuchen zur Miniaturisierung, z.B. von Kompressoren, lässt sich dieser Spalt häufig aufgrund von Fertigungstoleranzen, rotordynamischen Kräften und thermischem Verzug nicht im Gleichzug mit dem Impeller herunterskalieren, sondern verbleibt im Vergleich zu dem Impeller relativ groß. Der Spalt ist aber bestimmend für den Wirkungsgrad des Kompressors: je kleiner der Spalt ist, desto höher ist der Wirkungsgrad. Es kommt daher zu hohen Anforderungen an Fertigungstoleranzen, was zu einem hohen technischen Aufwand führen kann.

In der EP 2 186 996 B1 ist eine Turbomaschine mit einem Rotor beschrieben, welcher eine Ritzelwelle und ein Laufrad aufweist. Der Rotor ist durch ein Axiallager geführt und weist als zusätzliches axiales Führungselement einen Druckkamm auf.

Offenbarung der Erfindung

Die vorliegende Erfindung offenbart eine Vorrichtung mit den Merkmalen des Patentanspruchs 1 und ein Herstellungsverfahren mit den Merkmalen des Patentanspruchs 9.

Ist die erfindungsgemäße Vorrichtung zum Komprimieren eines Fluids ausgelegt, ist der gedeckelte Impeller ein Verdichter. Ist die Vorrichtung zum Expandieren eines Fluids ausgelegt, ist der gedeckelte Impeller eine Turbine. Im Folgenden wird stellvertretend von einem Impeller gesprochen und überwiegend von einer Vorrichtung zum Komprimieren des Fluids ausgegangen. Alle beschriebenen Prinzipien sind ebenso für Vorrichtung zum Expandieren des Fluids anwendbar.

Demgemäß wird eine Vorrichtung zum Komprimieren eines Fluids mit einem Impeller, einem Deckel und einem Axiallager geschaffen. Der Deckel begrenzt den Impeller, welcher in einem durch den Deckel definierten Innenraum angeordnet ist. Das heißt, der Impeller ist durch den Deckel in dem Innenraum eingehaust. Der Deckel ist an einer von dem Impeller abgewandten Außenseite des Innenraums mit einem ersten, insbesondere flachen, Abschnitt ausgebildet. Das Axiallager ist dazu ausgebildet, durch Zusammenwirken mit dem ersten Abschnitt des Deckels als Lagerfläche den Impeller in, bezogen auf die Drehachse des Impellers, axialer Richtung zu lagern. Insbesondere ist der Impeller durch Zusammenwirken einer Axiallagerscheibe des Axiallagers an einem Gehäuse der Vorrichtung mit dem ersten Abschnitt des Deckels in axialer Richtung lagerbar.

Weiterhin wird ein Herstellungsverfahren für eine Vorrichtung zum Komprimieren eines Fluids bereitgestellt, mit den Schritten: Ausbilden eines Impellers und eines Deckels welcher einen Innenraum definiert, in welchem der Impeller eingehaust ist; wobei der Deckel an einer von dem Innenraum abgewandten Außenseite des Deckels mit einem ersten, insbesondere flachen, Abschnitt ausgebildet wird; und Ausbilden eines Axiallagers derart, dass durch Zusammenwirken des Axiallagers, insbesondere einer Axiallagerscheibe an einem Gehäuse, mit dem ersten Abschnitt des Deckels als Lagerfläche der Impeller in, bezogen auf die Drehachse des Impellers, axialer Richtung lagerbar ist.

### Vorteile der Erfindung

Die der vorliegenden Erfindung zu Grunde liegende Erkenntnis besteht darin, dass durch radiales Verlängern des Deckels eines Impellers, insbesondere über die Impellerschaufeln des Impellers hinaus, Lagerflächen für zumindest eine axiale Lagerung, optional auch für eine radiale Lagerung, etwa durch Verlängerung des Deckels in axiale Richtung, des Impellers bereitstellbar sind.

Dadurch ergibt sich eine besonders effiziente und einfach herzustellende Konstruktion eines gedeckelten Laufrads, d.h. eines Impellers mit einem Deckel, sowie der entsprechenden Lagerung. Zudem können Spaltverluste durch eine Rückströmung von Leckageströmen in einen Spalt zwischen dem Deckel und einem Gehäuse, welches den Deckel umgibt, verringert oder unterbunden werden. Somit werden vorteilhaft eine Lager- und eine Dichtungsfunktion integriert bereitgestellt. Durch die erfindungsgemäße, besonders präzise Lagerung zumindest in axialer Richtung können Toleranzanforderungen für eine radiale Lagerung des Impellers verringert werden, da die eine Dichtfunktion des Radiallagers nicht mehr benötigt wird, weil diese durch die axiale Lagerung sichergestellt ist.

Die Funktion "radiales Lagern" kann vorteilhafterweise von der Funktion "axiale Dichtung" getrennt werden. Somit kann die Anforderung an einen Radiallagerspalt (minimale Höhe) reduziert werden, ohne dass sich die Dichtfunktion in axialer Richtung verschlechtert.

Die genannte Dichtungsfunktion lässt sich unabhängig von einer etwaigen radialen Bewegung der Welle und/oder des Impellers gestalten, wenn der erste Abschnitt des Deckels im Wesentlichen oder - im Rahmen von Toleranzen-vollständig, parallel zu einer virtuellen Ebene ausgerichtet ist, auf welcher die Drehachse des Impellers senkrecht steht. Mit andere Worten ist eine Flächennormale des ersten Abschnitts des Deckels vorteilhafterweise parallel zu der Drehachse des Impellers und der Welle. Alternativ kann die Flächennormale des ersten Abschnitts des Deckels einen Winkel von bis zu 0,05 Grad, insbesondere von bis zu 0,03 Grad, ganz besonders von zwischen 0,01 Grad und 0,03 Grad, zu einer Stellung parallel zu der Drehachse einschließen.

Weiterhin ist durch die integrierte Lager- und Dichtungsfunktion eine Rotorlänge, d.h. eine Länge des Impellers und der Welle, an welcher der Impeller üblicherweise befestigt ist, verringerbar, wodurch eine günstigere Rotordynamik des Impellers und der Welle erzielbar ist.

Der erste Abschnitt des Deckels erstreckt sich beispielsweise, bezogen auf eine Drehachse des Impellers, im Wesentlichen oder vollständig in radialer und tangentialer Richtung.

Vorteilhafte Ausführungsformen und Weiterbildungen ergeben sich aus den Unteransprüchen sowie aus der Beschreibung unter Bezugnahme auf die Figuren.

Gemäß einer vorteilhaften Weiterbildung ist das Axiallager als eine Art Folienlager ausgebildet. Die Konstruktion der Bump-Folie (engl. "bump foil") des Folienlagers ist so gewählt, dass in radialer Richtung keine Leckage entsteht. Die Top-Folie (engl. "top foil") des Folienlagers ist flach, anstatt wie bei herkömmlichen axialen Folienlager in Umfangsrichtung keilförmig, ausgebildet. Die nötige Tragkraft wird vielmehr durch Spiralrillen auf der Außenseite des Deckels erzeugt. Die Konstruktion ähnelt daher der Funktionsweise einer Gleitringdichtung. Das Folienlager kann daher alternativ mit einem O-Ring anstatt einer Bump-Folie ausgebildet sein. Statt des Folienlagers kann auch eine Gleitringdichtung zur axialen Lagerung verwendet werden.

Gemäß einer weiteren vorteilhaften Weiterbildung ist der erste Abschnitt des Deckels an einem, bezogen auf die Drehachse des Impellers, in radialer Richtung äußeren Ende des Deckels angeordnet.

Gemäß einer weiteren vorteilhaften Weiterbildung ist der erste Abschnitt des Deckels rotationssymmetrisch um die Drehachse des Impellers ausgebildet. Somit kann eine symmetrische und damit besonders einheitliche Lagerung in axialer Richtung erfolgen.

Gemäß einer weiteren vorteilhaften Weiterbildung weist der erste Abschnitt an einer von einem Innenraum des Deckels, in welchem der Impeller angeordnet ist, abgewandten Außenseite des ersten Abschnitts eine Rillenstruktur auf. Vorzugsweise umfasst die Rillenstruktur spiralförmig ausgebildete Rillen.

Gemäß einer weiteren vorteilhaften Weiterbildung umfasst die Vorrichtung ein Radiallager; wobei der Deckel an der von dem Innenraum abgewandten Außenseite des Deckels einen zweiten Abschnitt aufweist; wobei das Radiallager dazu ausgebildet ist, durch Zusammenwirken mit dem zweiten Abschnitt als Lagerfläche den Impeller in, bezogen auf die Drehachse des Impellers, radialer Richtung zu lagern. Bevorzugt ist der zweite Abschnitt als mit der Drehachse des Impellers konzentrische Zylinderfläche ausgebildet.

Gemäß einer weiteren vorteilhaften Weiterbildung ist das Radiallager als Folienlager, insbesondere der Generation I oder der Generation II ausgebildet. Alternativ kann das Radiallager als konventionelles aerodynamisches Lager, z.B. als Herringbone-Lager oder als aerostatisches Lager mit Bohrungen zur Druckbeaufschlagung ausgeführt sein.

Gemäß einer vorteilhaften Weiterbildung des erfindungsgemäßen Herstellungsverfahrens werden der Impeller und der Deckel einstückig ausgebildet. Gemäß einer vorteilhaften Weiterbildung des erfindungsgemäßen Herstellungsverfahrens werden der Impeller und der Deckel stoffschlüssig ausgebildet.

### Kurze Beschreibung der Zeichnungen

Die vorliegende Erfindung wird nachfolgend anhand der in den schematischen Figuren der Zeichnungen dargestellten Ausführungsbeispiele näher erläutert. Es zeigen:
- Fig. 1: ein schematisches Blockdiagramm einer Vorrichtung 1 zum Komprimieren eines Fluids F1 gemäß einer Ausführungsform der vorliegenden Erfindung;
- Fig. 2: eine schematische Längsschnittsansicht durch eine Vorrichtung 100 zum Komprimieren eines Fluids F1 gemäß einer weiteren Ausführungsform der vorliegenden Erfindung;
- Fig. 3: eine Detailansicht des axialen Folienlagers 32 der Vorrichtung 100 gemäß Fig. 2 in Zusammenwirkung mit dem ersten Abschnitt 16-1 des Deckels 16 als korrespondierender Lagerfläche;
- Fig. 4: eine Detailansicht des ersten radialen Folienlagers 42 der Vorrichtung 100 gemäß Fig. 2 in Zusammenwirkung mit dem zweiten Abschnitt 16-2 des Deckels 16 als korrespondierender Lagerfläche; und
- Fig. 5: ein Flussdiagram zum Veranschaulichen eines Verfahrens zum Herstellen einer Vorrichtung 1; 100 zum Komprimieren eines Fluids F1 gemäß einer weiteren Ausführungsform der vorliegenden Erfindung.

In allen Figuren sind gleiche bzw. funktionsgleiche Elemente und Vorrichtungen - sofern nichts anderes angegeben ist - mit denselben Bezugszeichen versehen. Die Nummerierung von Verfahrensschritten dient der Übersichtlichkeit und soll insbesondere nicht, sofern nichts anderes angegeben ist, eine bestimmte zeitliche Reihenfolge implizieren. Insbesondere können auch mehrere Verfahrensschritte gleichzeitig durchgeführt werden.

### Beschreibung der Ausführungsbeispiele

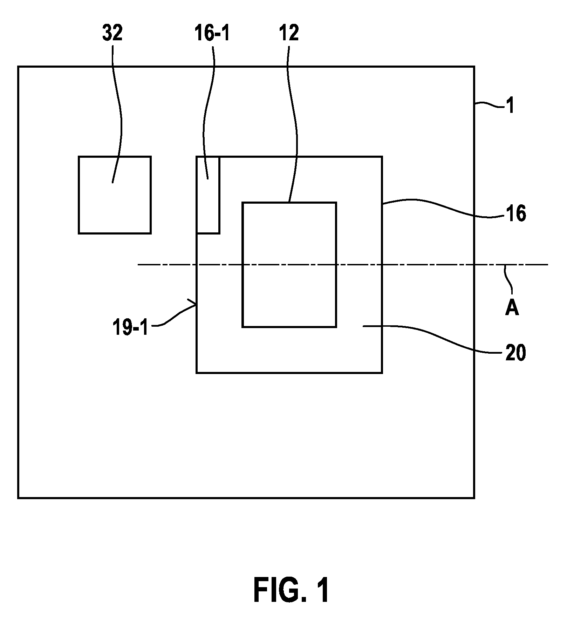

Fig. 1 zeigt ein schematisches Blockdiagramm einer Vorrichtung 1 zum Komprimieren eines Fluids F1 gemäß einer Ausführungsform der vorliegenden Erfindung.

Die Vorrichtung 1 umfasst einen Impeller 12 und einen Deckel 16, welcher einen Innenraum 20 definiert, in welchem der Impeller 12 eingehaust ist. Der Deckel 16 ist an einer von dem Innenraum 20 abgewandten Außenseite 19-1 des Deckels 16 mit einem ersten, insbesondere flachen, Abschnitt 16-1 ausgebildet, welcher sich, bezogen auf eine Drehachse A des Impellers 12, beispielsweise in radialer und tangentialer Richtung erstreckt. Wo immer hier, im Vorangehenden oder im Folgenden von einer radialen, einer tangentialen oder einer axialen Richtung gesprochen wird, soll dies stets in Bezug auf die Drehachse A des Impellers 12 verstanden werden.

Die Vorrichtung 1 umfasst weiterhin ein Axiallager 32, welches dazu ausgebildet ist, durch Zusammenwirken mit dem ersten Abschnitt 16-1 des Deckels 16 als Lagerfläche den Impeller 12 in, bezogen auf die Drehachse A des Impellers 12, axialer Richtung zu lagern und gleichzeitig, durch Ausbilden eines engen Spaltes 36 zwischen einer Top-Folie 31 mit dem Deckel 16 einen Leckagestrom zwischen dem Deckel 16 und dem Gehäuse 30 zu verringern oder zu unterbinden. Der Spalt 36 ist vorzugsweise weniger als 5 Mikrometer breit.

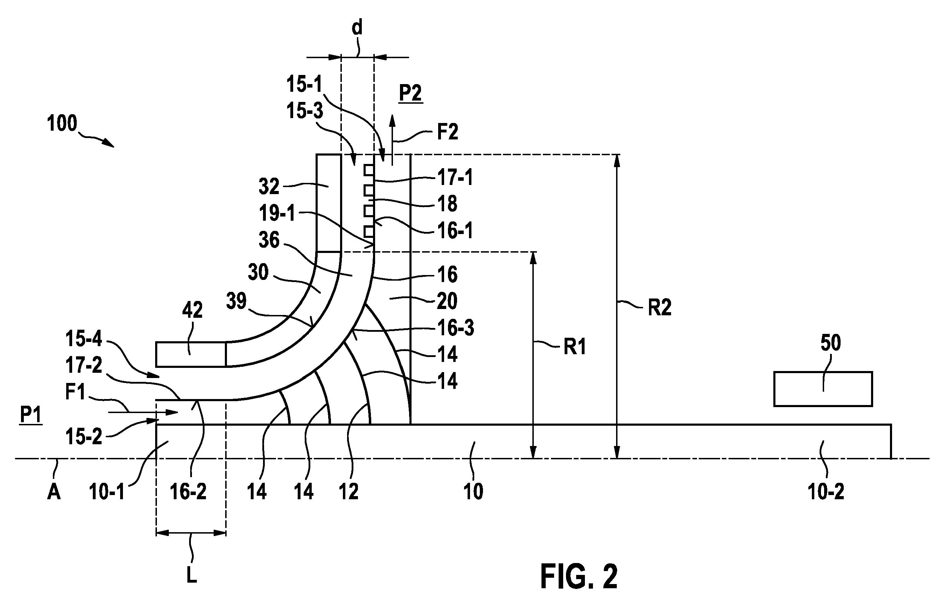

Fig. 2 zeigt eine schematische Längsschnittsansicht durch eine Vorrichtung 100 zum Komprimieren eines Fluids F1 gemäß einer weiteren Ausführungsform der vorliegenden Erfindung.

Die Vorrichtung 100 ist eine Variante der Vorrichtung 1 und umfasst einen Impeller 12 mit Impellerschaufeln 14, wobei in Fig. 2 beispielhaft vier Impellerschaufeln 14 angedeutet sind. Die Impellerschaufeln 14 sind auch als Impellerflügel bezeichenbar. Der Impeller 12 ist fest an einer Welle 10 befestigt, welche zum Drehen des Impellers 12 um eine Drehachse A drehbar ist. Der Impeller 12 ist, in axialer Richtung außen an der Welle 10 angeordnet.

Der Impeller 12 ist von einem Deckel 16 der Vorrichtung 100 in einem Innenraum 20 des Deckels 16 eingehaust und ist deswegen auch als ein gedeckeltes Laufrad bezeichenbar. Der Deckel 16 weist an einem ersten, in radialer Richtung äußeren Ende 17-1 des Deckels 16 eine erste Öffnung 15-1 auf. Der Deckel 16 weist an einem zweiten, in axialer Richtung äußeren Ende 17-2 des Deckels 16 eine zweite Öffnung 15-2 auf. Durch die zweite Öffnung 15-2 ist ein Fluid F1 mit einem ersten Druck P1 von außerhalb des Impellers 12 und des Deckels 16 in den Innenraum 20 des Deckels 16 zu dem Impeller 12 und den Impellerschaufeln 14 einleitbar oder ausleitbar. Mittels des Impeller 12 ist das eingeleitete Fluid F1 durch Drehen des Impellers 12 um die Drehachse A mittels der Impellerschaufeln 14 komprimierbar oder expandierbar und als auszuleitendes oder einzuleitendes Fluid F2 mit einem zweiten Druck P2 durch die erste Öffnung 15-1 aus dem Innenraum 20 des Deckels 16 ausleitbar. Der Druck P2 ist insbesondere größer als der Druck P1, d.h. P2 > P1, im Falle einer Kompression; der Druck P2 ist kleiner als der Druck P1, d.h P2 < P1, im Falle einer Expansion.

Vorzugsweise ist die zweite Öffnung 15-2 an einem ersten axialen Ende 10-1 der Welle 10 angeordnet. Vorzugsweise ist die erste Öffnung 15-1 an einem in radialer Richtung am Weitesten von der Welle 10 entfernt angeordneten Abschnitt des Deckels 16 angeordnet.

An dem ersten, in radialer Richtung außen liegenden Ende 17-1 des Deckels 16 ist der Deckel 16 mit einem ersten flachen Abschnitt 16-1 ausgebildet. Der erste Abschnitt 16-1 ist vorzugsweise flach, das heißt, besteht aus einer Fläche mit geringer Krümmung, vorzugsweise aus einer ebenen Fläche. Der erste Abschnitt 16-1 erstreckt sich weiter vorzugsweise im Wesentlichen oder vollständig in radialer und tangentialer Richtung. Der erste Abschnitt 16-1 beschreibt eine Fläche mit geringer Krümmung, insbesondere eine ebene Fläche, welche vollständig, größtenteils oder im Mittel innerhalb einer virtuellen Ebene liegt, welche von einem radialen und einem tangentialen Einheitsvektor aufgespannt wird.

Mit "im Wesentlichen" soll insbesondere gemeint sein, dass der erste Abschnitt 16-1, beispielsweise als ebene Fläche, einen Diederwinkel in Bezug auf die besagte virtuelle Ebene aufweisen kann, welcher einen Wert von beispielsweise bis zu 15°, insbesondere bis zu 10°, bevorzugt bis zu 5°, besonders bevorzugt unter 2°, aufweisen kann. Ganz besonders bevorzugt ist der erste Abschnitt 16-1 genau in der virtuellen Ebene enthalten, wobei die Drehachse A auf der virtuellen Ebene senkrecht steht.

In der in Bezug auf Fig. 2 beschriebenen Ausführungsform ist der erste Abschnitt 16-1 eine um die Drehachse A rotationssymmetrische ebene ringförmige Fläche, welche innerhalb der virtuellen Ebene senkrecht zu der Drehachse A angeordnet ist. Die ringförmige Fläche des ersten Abschnitts 16-1 weist einen inneren Radius R1 und einen äußeren Radius R2 auf, wobei der äußere Radius R2 größer als der innere Radius R1 ist. Der Wert des äußeren Radius' R2 im Verhältnis zu dem inneren Radius R1 ist abhängig von der konkret angestrebten Verwendung der Vorrichtung 100 anpassbar.

Bei der Vorrichtung 100 sind an einer von dem Impeller und/oder von dem Innenraum 20 des Deckels 16, in welchem der Impeller 12 angeordnet ist, abgewandten Außenseite 19-1 des Deckels 16 spiralförmige Rillen 18 angeordnet. Die Rillen 18 sind vorzugsweise in einem subtraktiven Verfahren herstellbar, d.h. sie werden beispielsweise aus dem ersten Abschnitt 16-1 durch Lasereinwirkung, Fräsen oder durch Ätzen herausgebildet. Die Rillen 18 können die gleiche Funktion wie Spiralrinnen einer Gleitringdichtung erfüllen.

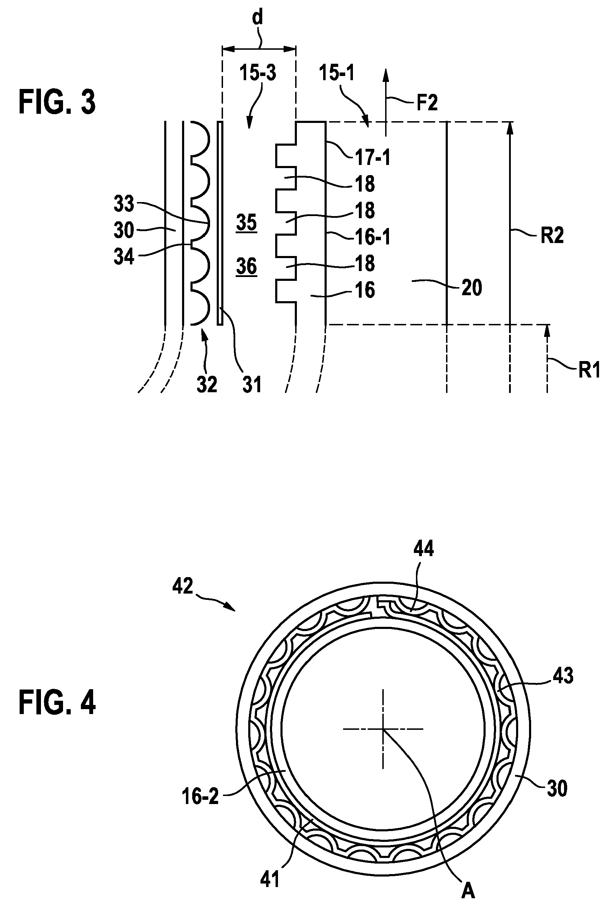

Die Vorrichtung 100 weist weiterhin ein Gehäuse 30 auf, in Bezug auf welches der Deckel 16 mit dem Impeller 12 lagerbar ist. Der Deckel 16 mit dem Impeller 12 kann insbesondere in dem Gehäuse 30 eingehaust sein. An einem in axialer Richtung dem ersten Abschnitt 16-1, insbesondere den spiralförmigen Rinnen 18, benachbarten Abschnitt des Gehäuses 30 ist ein axiales Folienlager 32, insbesondere mit flacher, nicht-keilförmiger Top-Folie, 31 angeordnet. Für die Beschreibung des axialen Folienlagers 32 wird auch auf die nachfolgende Fig. 3 verwiesen.

Fig. 3 zeigt eine Detailansicht des axialen Folienlagers 32 der Vorrichtung 100 gemäß Fig. 2 in Zusammenwirkung mit dem ersten Abschnitt 16-1 des Deckels 16 als korrespondierender Lagerfläche.

Das axiale Folienlager 32 dient sowohl zum Bereitstellen einer Dichtwirkung als auch zum axialen Lagern des Impellers 12 mit dem Deckel 16, wobei der erste flache Abschnitt 16-1 des Deckels als dem axialen Folienlager 32 korrespondierende Lagerfläche fungiert. Als Teil des axialen Folienlagers 32 sind an dem Gehäuse 30 eine Bump-Folie 34 sowie eine Top-Folie 31 angeordnet. Bei Drehung der Welle 10 und somit auch der spiralförmigen Rillen 18 und des ersten flachen Abschnitts 16-1 um die Drehachse A wird ein Gasfilm 35 zwischen den spiralförmigen Rillen 18 und der Top-Folie 31 erzeugt, mittels welchem eine axiale Lagerung des Deckels 16 sowie des mit dem Deckel 16 verbundenen Impellers 12 bewerkstelligt wird. Die Top-Folie 31 wird dabei an die elastisch ausgebildete Bump-Folie 34 gedrückt, deren Elastizität, d.h. Federhärte, von dem Material der Bump-Folie 34 sowie der Ausgestaltung von einzelnen federnden Rippen 33 der Bump-Folie 34 abhängt.

Die Rippen 33 der Bump-Folie 34 sind auch als Bumpwellen bezeichenbar und sind gemäß Fig. 2 in Umfangsrichtung ausgebildet und angeordnet. Hierdurch-und durch das Andrücken im Betrieb - wird eine radiale Durchströmung der Rippen 33 unterbunden. Alternativ kann die Bump-Folie auch durch andere elastische und gleichzeitig radial abdichtende Bauelemente, z.B. einen oder mehrere O-Ringe, ersetzt werden.

Damit der Impeller 12 mit dem Deckel 16 um die Drehachse A freier rotieren kann, ist zwischen dem Gehäuse 30 und dem Deckel 16 ein Spalt 36 vorgesehen. Da das auszuleitende Fluid F2 mit einem höheren Druck aus dem Deckel 16 ausgeleitet als in den Deckel 16 eingeleitet wird, könnte es an einer dritten Öffnung 15-3 zwischen dem Gehäuse 30 und dem ersten Ende 17-1 des Deckels 16 prinzipiell zu einem unerwünschten Leckagestrom von außen in den Spalt 36 kommen. Im Turbinenbetrieb kann entsprechend ein unerwünschter Leckagestrom aus dem Spalt 36 nach außen zu unterbinden sein.

Bei der Vorrichtung 100 dient das axiale Folienlager 32 zusammen mit den Spiralrillen 18 und dem ersten flachen Abschnitt 16-1 des Deckels 16 gleichzeitig als Drosselstelle, mittels welcher der Leckagestrom durch die Öffnung 15-3 vermindert oder unterbunden werden kann. In der vorgeschlagenen Konstruktion sind also vorteilhaft eine Dichtungsfunktion und eine Lagerfunktion gleichzeitig bereitgestellt. Die radiale Lagerung ist dabei räumlich von der Dichtungsfunktion getrennt.

Eine Spaltbreite d der dritten Öffnung 15-3 ist dabei je nach gewünschter Anwendung, beispielsweise abhängig von bekannten Herstellungstoleranzen und/oder bekannten Minimal-/Maximal-Lasten auf der Welle 10 anpassbar. Das Anpassen der Spaltbreite d kann insbesondere durch Anpassen einer Federhärte der Bump-Folie 34, d.h. deren Steifigkeit, durch eine Drehgeschwindigkeit der Welle 10 sowie durch die konkrete Ausführung der Spiralrinnen 18 erfolgen.

Alternativ oder zusätzlich können Rillen, insbesondere spiralförmige Rillen, auch an der Top-Folie 31 des axialen Folienlagers 32, das heißt auf dem gegenüber dem rotierenden Deckel 16 ruhenden Teil, an einer dem Spalt 36 zugewandten Außenseite angeordnet werden.

Der Deckel 16 ist mit dem Impeller 12 fix verbunden und kann insbesondere mit dem Impeller 12 einstückig oder stoffschlüssig ausgebildet sein. Vorzugsweise ist auch der erste flache Abschnitt 16-1 stoffschlüssig oder einstückig mit dem Deckel 16 ausgebildet.

An dem zweiten Ende 17-2 des Deckels 16 ist ein zweiter Abschnitt 16-2 des Deckels 16 als mit der Drehachse A des Impellers 12 konzentrische Zylinderfläche mit einer Zylinderhöhe L ausgebildet. Der zweite Abschnitt 16-2 fungiert als Lagerfläche eines ersten radialen Folienlagers 42, welches, in radialer Richtung dem zweiten Abschnitt 16-2 des Deckels 16 benachbart, an dem Gehäuse 30 ausgebildet ist. Zur Beschreibung des ersten radialen Folienlagers 42 wird auch auf die nachfolgende Fig. 4 verwiesen.

Fig. 4 zeigt eine Detailansicht des ersten radialen Folienlagers 42 der Vorrichtung 100 gemäß Fig. 2 in Zusammenwirkung mit dem zweiten Abschnitt 16-2 des Deckels 16 als korrespondierender Lagerfläche im Querschnitt.

Das erste radiale Folienlager 42 weist ebenfalls eine Bump-Folie 44 mit federnden Rippen 43 und eine Top-Folie 41 auf und umschließt in tangentialer Richtung den zweiten Abschnitt 16-2 zum Lagern des Deckels 16 und des Impellers 12 sowie der Welle 10 in radialer Richtung, indem bei Drehen der Welle 10 um die Drehachse A ein Gaskissen zwischen der Top-Folie 41 des ersten radialen Folienlagers 42 und dem zweiten Abschnitt 16-2 des Deckels 16 erzeugt wird. Dabei wird die Top-Folie 41 des ersten radialen Folienlagers 42 gegen die federnden Rippen 43 der Bump-Folie 44 gedrückt. Die Elastizität, d.h. Federhärte, der Bump-Folie 44 ist abhängig von dem Material der Bump-Folie 44 sowie der Ausgestaltung der einzelnen federnden Rippen 43 der Bump-Folie 44.

An einem dem ersten Ende 10-1 der Welle 10 gegenüberliegenden zweiten Ende 10-2 der Welle ist gemäß Fig. 2 ein optionales zweites Radiallager 50 ausgebildet, insbesondere ebenfalls als radiales Folienlager. An dem zweiten Ende 10-2 der Welle kann ist vorzugsweise ein Turbinenlaufrad oder eine zweite Stufe eines Verdichters zum Ergänzen des Impellers als erste Stufe des Verdichters angeordnet.

Ein zwischen dem ersten und dem zweiten Abschnitt 16-1, 16-2 angeordneter dritter Abschnitt 16-3 des Deckels 16 sowie ein mit dem dritten Abschnitt 16-3 korrespondierender Abschnitt 39 des Gehäuses 30 sind vorzugsweise derart ausgebildet, dass der Spalt 36 in dem Bereich zwischen dem dritten Abschnitt 16-3 und dem korrespondierenden Abschnitt 39 des Gehäuses 30 größer ist, insbesondere wesentlich größer, besonders bevorzugt um mindestens einen Faktor 100 oder mehr, größer ist, als zwischen dem ersten Abschnitt 16-1 und dem axialen Folienlager 32 und/oder als zwischen dem zweiten Abschnitt 16-2 und dem ersten radialen Folienlager 42. Hierdurch ist eine Reibleistung des Deckels 16 an dem Gehäuse 30 weiter verringerbar.

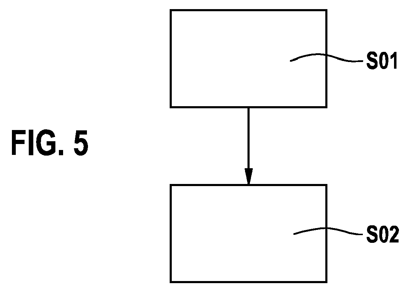

Fig. 5 zeigt ein Flussdiagramm zum Veranschaulichen eines Verfahrens zum Herstellen einer Vorrichtung 1; 100 zum Komprimieren eines Fluids F1 gemäß einer weiteren Ausführungsform der vorliegenden Erfindung. Das beschriebene Herstellungsverfahren ist zur Herstellung einer oder beider der Vorrichtungen 1; 100 geeignet und kann speziell dazu angepasst sein. Insbesondere ist das Verfahren gemäß allen oben, insbesondere in Bezug auf die Figuren 1 bis 4 beschriebenen Varianten und Weiterbildungen der erfindungsgemäßen Vorrichtung anpassbar.

In einem Schritt S01 wird ein Impeller 12, welcher von einem Deckel 16 eingehaust ist, ausgebildet, wobei der Deckel 16 einen Innenraum 20 definiert, in welchem der Impeller 12 eingehaust ist und wobei der Deckel 16 an einer von dem Innenraum 20 abgewandten Außenseite 19-1 des Deckels 16 mit einem ersten Abschnitt 16-1 ausgebildet wird. Vorzugsweise werden der Impeller 12 und der Deckel 16 stoffschlüssig oder einstückig ausgebildet. Der Impeller 12 und der Deckel 16 können insbesondere gemäß einer der oben beschriebenen Varianten der erfindungsgemäßen Vorrichtung ausgebildet werden.

In einem Schritt S02 wird ein Axiallager 32 derart ausgebildet, dass durch Zusammenwirken des Axiallagers 32 mit dem ersten Abschnitt 16-1 des Deckels 16 als Lagerfläche der Impeller 12 in, bezogen auf die Drehachse A des Impellers 12, axialer Richtung lagerbar ist.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise ist der dritte Abschnitt 16-3 in Fig. 2 mit einer Konturlinie im Querschnitt dargestellt, welche durch eine stetig differenzierbare Funktion beschrieben wird. Diese Konturlinie des dritten Abschnitts 16-3 kann aber auch als nicht stetig differenzierbarer Polygonzug ausgebildet sein. Der korrespondierende Abschnitt 39 des Gehäuses 30 kann entsprechend ebenfalls mit einem Polygonzug im Querschnitt ausgebildet sein. Hierdurch kann sich die Fertigung des Deckels 16 und/oder des Gehäuses 30 vereinfachen.

## Patentansprüche

1. Vorrichtung (1; 100) zum Komprimieren oder Expandieren eines Fluids (F1) mit:
einem Impeller (12);
einem Deckel (16), welcher einen Innenraum (20) definiert, in welchem der Impeller (12) eingehaust ist;
wobei der Deckel (16) an einer von dem Innenraum (20) abgewandten Außenseite (19-1) des Deckels (16) mit einem ersten Abschnitt (16-1) ausgebildet ist; und
einem Axiallager (32), welches dazu ausgebildet ist, durch Zusammenwirken mit dem ersten Abschnitt (16-1) des Deckels (16) als Lagerfläche den Impeller (12) in, bezogen auf die Drehachse (A) des Impellers (12), axialer Richtung zu lagern.

2. Vorrichtung nach Anspruch 1,
wobei das Axiallager (32) als eine Art Folienlager (32) mit flacher Top-Folie (31) ausgebildet ist.

3. Vorrichtung nach Anspruch 1 oder 2,
wobei der erste Abschnitt (16-1) des Deckels (16) an einem, bezogen auf die Drehachse (A) des Impellers (12), in radialer Richtung äußeren Ende (17-1) des Deckels (16) angeordnet ist.

4. Vorrichtung nach einem der Ansprüche 1 bis 3,
wobei der erste Abschnitt (16-1) des Deckels (16) rotationssymmetrisch um die Drehachse (A) des Impellers (12) ausgebildet ist.

5. Vorrichtung nach einem der Ansprüche 1 bis 4,
wobei der erste Abschnitt (16-1) an einer von einem Innenraum (20) des Deckels (16), in welchem der Impeller (12) angeordnet ist, abgewandten Außenseite (19-1) des ersten Abschnitts (16-1) eine Rillenstruktur (18) aufweist.

6. Vorrichtung nach Anspruch 5,
wobei die Rillenstruktur spiralförmig ausgebildete Rillen (18) umfasst.

7. Vorrichtung nach einem der Ansprüche 1 bis 6,
mit einem Radiallager (42);
wobei der Deckel (16) an der von dem Innenraum (20) abgewandten Außenseite (19-1) des Deckels (16) einen zweiten Abschnitt (16-2) aufweist; wobei das Radiallager (42) dazu ausgebildet ist, durch Zusammenwirken mit dem zweiten Abschnitt (16-2) als Lagerfläche den Impeller (12) in, bezogen auf die Drehachse (A) des Impellers (12), radialer Richtung zu lagern.

8. Vorrichtung nach Anspruch 7,
wobei das Radiallager (42) als ein Folienlager (42) ausgebildet ist.

9. Herstellungsverfahren für eine Vorrichtung (1; 100) zum Komprimieren eines Fluids (F1, F2) mit den Schritten:
Ausbilden (S01) eines Impellers (12) und eines Deckels (16), welcher einen Innenraum (20) definiert, in welchem der Impeller (12) eingehaust ist;
wobei der Deckel (16) an einer von dem Innenraum (20) abgewandten Außenseite (19-1) des Deckels (16) mit einem ersten Abschnitt (16-1) ausgebildet wird; und
Ausbilden (S02) eines Axiallagers (32), derart, dass durch Zusammenwirken des Axiallagers (32) mit dem ersten Abschnitt (16-1) des Deckels (16) als Lagerfläche der Impeller (12) in, bezogen auf die Drehachse (A) des Impellers (12), axialer Richtung lagerbar ist.

10. Herstellungsverfahren nach Anspruch 9,
wobei der Impeller (12) und der Deckel (16) einstückig oder stoffschlüssig ausgebildet werden.
